# EUROPÄISCHE PATENTSCHRIFT

(11) **EP 3 374 099 B1**
(45) Veröffentlichungstag und Bekanntmachung des Hinweises auf die Patenterteilung: **02.09.2020**
(21) Anmeldenummer: 16788657.1
(22) Anmeldetag: 25.10.2016
(51) Int. Cl.: B08B 3/02, B65G 45/24, B65G 47/51

(54) **REINIGUNGSVERFAHREN UND -VORRICHTUNG FÜR BANDPUFFER**
CLEANING METHOD AND DEVICE FOR BELT STORAGE BUFFERS
PROCÉDÉ ET DISPOSITIF DE NETTOYAGE DE TAMPON À BANDES

(30) Priorität: 12.11.2015 CH 16462015
(43) Veröffentlichungstag der Anmeldung: 19.09.2018
(73) Patentinhaber: Rotzinger AG, 4303 Kaiseraugst (CH)
(72) Erfinder: PHILIPP, Kurt, 79639 Grenzach-Wyhlen (DE)
(74) Vertreter: Braun, André jr.
(86) Internationale Anmeldenummer: PCT/EP2016/075617
(87) Internationale Veröffentlichungsnummer: WO 2017/080809

(56) Entgegenhaltungen:
- EP-A1- 0 771 745
- EP-A2- 0 970 760
- DE-A1-102012 003 947
- NL-C2- 1 019 434
- US-A- 2 881 463
- US-A- 5 067 192
- US-A- 5 555 598
- US-A1- 2015 158 677

## Beschreibung

Die Erfindung betrifft einen Bandpuffer mit mehreren übereinander angeordneten Bänder und das entsprechende Reinigungsverfahren zur Reinigung des Bandpuffers. In der Lebensmittelproduktion werden üblicherweise zwischen Produktion und Verpackung auch Puffereinrichtungen eingesetzt, damit diese Prozesse entkoppelt werden können und somit die Effizienz dieser Linien erhöht werden kann. Dadurch kann Produktverlust vermieden werden, der durch Stopps im Verpackungsbereich entstehen kann. Hierfür kommen auch Bandspeicher oder -puffer zum Einsatz, bei denen mehrere Ebenen von Förderbändern übereinander angeordnet sind, auf denen frisch produzierte Produkte zwischengespeichert werden können. Diese Pufferbänder dienen auch als Abkühlstrecke, z.B. für Biscuits die heiss aus dem Ofen kommen. Solche kombinierte Puffer -und Kühlstrecken können bis zu 300m lang sein. Die Bandbreite kann bis zu 2000mm betragen in Ausnahmefällen sogar noch mehr. Um Platz zu sparen, sind diese Bandstrecken häufig über Kopf angeordnet und somit erschwert zugänglich. Bandpuffer aus übereinander angeordneten Bändern können bis zu beispielsweise 6000mm hoch werden.

Da es sich hierbei zumeist um die Handhabung von nackten Produkten handelt, sind diese Bandstrecken oft zu reinigen, weil diese entweder stark verschmutzen, oder bei Produktwechsel sowieso systematisch gereinigt werden müssen. Diese Reinigungen dauern oft lange, da grosse Strecken und somit grosse Gurtflächen gereinigt werden müssen, in auch oft unzugänglichen Platzverhältnissen. In der Reinigungszeit steht die betreffende Anlage nicht zur Produktion zur Verfügung. Da die Reinigung oft in Handarbeit erfolgt, ist diese zeit -und personalintensiv und ist somit kostspielig.

Das Dokument US 2015/158677 zeigt einen typischen Bandpuffer mit einer Vielzahl von übereinander angeordneten Pufferbändern.

Aus dem Dokument EP 077745 ist ein Reinigungssystem zum Reinigen von Förderbändern bekannt, in dem ein zu reinigendes Band durch eine geschlossene Reinigungskammer zum Aufbringen und Absaugen eines Reinigungsmediums läuft, in der die Reinigung erfolgt. Für die Reinigung der übereinander angeordneten Bänder eines Bandpuffers ist das Reinigungssystem wegen der geschlossenen Kammer, durch die das zu reinigende Band laufen muss, nicht einsetzbar.

Das Dokument US 2,881,463 beschreibt eine Reinigungsvorrichtung für Förderbänder. Sie besitzt einen Reinigungskopf mit einem geschlossenen Gehäuse, in dem Reinigungsbürsten angeordnet sind und durch den das Band läuft. Eine Vorrichtung zur Höhenverstellung des Reinigungskopfes dient dazu, den Reinigungskopf auf das Niveau von auf unterschiedlicher Höhe angeordneten jeweils einzelnen Bändern zu bringen. Wegen des geschlossenen Reinigungskopfs ist diese Vorrichtung zur Reinigung der übereinander angeordneten Bänder eines Bandpuffer jedoch nicht geeignet. Der Erfindung liegt daher die Aufgabe zugrunde, die Reinigung von Mehrlagen-Bandpuffern zu vereinfachen und zu verbessern.

Erfindungsgemäss wird dies erreicht durch die kennzeichnenden Merkmale der Ansprüche 1 und 2. Im Folgenden werden anhand der beiliegenden Zeichnungen bevorzugte Ausführungsbeispiele der Erfindung beschrieben. Es zeigen:
- Fig. 1: eine Seitenansicht eines mit Reinigungseinrichtungen versehenen typischen Bandpuffers,
- Fig. 2: eine vergrösserte Darstellung des Austragbereichs des Bandpuffers gemäss Fig. 1,
- Fig. 3: eine Seitenansicht eines Bandpuffers mit einseitiger Produktzuführung und -entladung

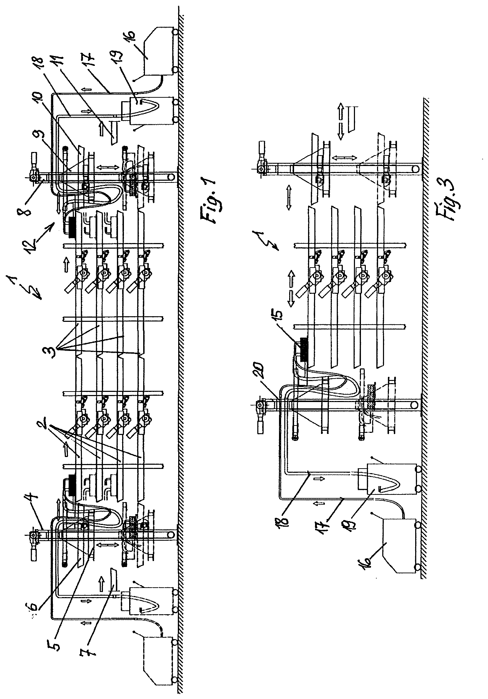

Der in Fig. 1 gezeigte Bandpuffer 1 umfasst vier übereinander angeordnete Bandstrecken, die ihrerseits jeweils aus einem einlaufseitigen Förderband 2 und einem dahinter angeordneten auslaufseitigen Förderband 3 bestehen. Der Produkteinlauf erfolgt über einen Elevator 4 mit einem vertikal bewegten Schlitten 5, auf dem ein Übergabeband 6 angeordnet ist. Der Elevator übernimmt die auf einem zuführenden Band 7 ankommenden Produkte auf sein Übergabeband, das anschliessend auf eine der verschiedenen Ebenen des Bandpuffers gebracht wird, wo das frisch produzierte Produkt auf das entsprechende einlaufseitige Förderband des Zwischenpuffers gefahren wird. Der Elevator kann auch mehrere Übergabebänder aufweisen.

Am Auslauf des Bandpuffers befindet sich ebenfalls ein gleich aufgebauter Elevator 8 mit einem Schlitten 9, der mit einem Übernahmeband 10 die Produkte von den in der Höhe befindlichen Bandebenen übernimmt und an eine Verpackungslinie 11 abgibt.

An den Schlitten 5, 9 der beiden Elevatoren ist jeweils eine Reinigungsvorrichtung 12 angebracht. Aufbau und Funktion dieser beiden Reinigungsvorrichtungen sind gleich, weshalb im Folgenden nur eine, nämlich die auslaufseitige, Reinigungsvorrichtung beschrieben wird.

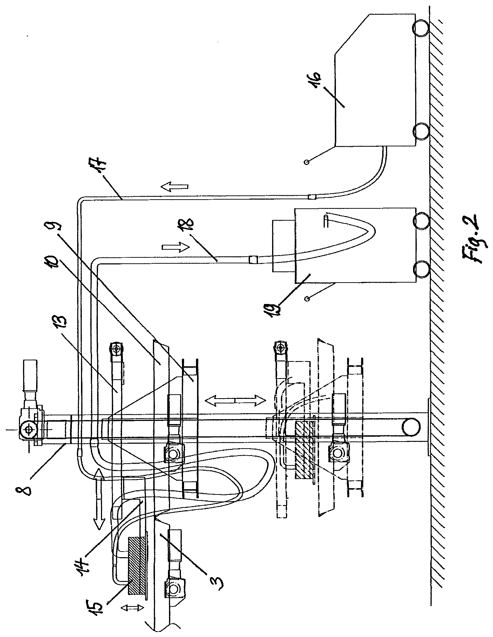

Am Schlitten 9 ist, wie aus der vergrösserten Darstellung der Fig. 2 deutlicher ersichtlich, oberhalb des Bands 10 ein sich in Bandlaufrichtung erstreckendes Tragschienenpaar 13 angeordnet, in welchem servomotorisch angetrieben ein Tragarm 14 bewegbar ist. Am Enden des Tragarms ist ein Reinigungskopf 15 einer an sich bekannten Reinigungseinheit angebracht. Der Reinigungskopf ist ausserdem vertikal verstellbar.

Der Reinigungskopf besitzt zwei Kammern. In der eingangsseitigen Kammer wird ein Reinigungsmedium, vorzugsweise Dampf über Düsen auf die Gurtoberfläche aufgebracht. Durch Druck und Temperatur wird Schmutz auf der Gurtoberfläche effizient gelöst. In der auslaufseitigen Kammer wird der gelöste Schmutz mit dem Wasser abgesaugt. Die Gurtoberfläche bleibt trocken und es wird kein Wasser an die umgebende Struktur abgegeben.

Die Reinigungseinheit mit Reinigungskopf 15, Dampferzeuger 16, Dampfzuleitung 17, Absaugleitung 18 und Saugeinheit 19 ist ein marktübliches industrielles System und wird deshalb hier nicht im Detail beschrieben. Dampferzeuger und Saugeinheit können mobil oder stationär an der Anlage positioniert werden.

Um ein leeres Band, in der in Fig. 2 gezeigten Situation das oberste Förderband 3, zu reinigen, wird der Schlitten 9 auf die Höhe dieses Bands angehoben und der Tragarm 14 ausgefahren, so dass der Reinigungskopf 15 über das Band gelangt, wo er auf das Band abgesenkt wird. Wenn sich der Reinigungskopf auf dem Gurt befindet, werden der Bandlauf und gleichzeitig die Reinigungseinheit eingeschaltet. Nach einem oder mehreren Durchläufen des Bands ist der Gurt sauber und der Reinigungsvorgang beendet. Der Reinigungskopf wird zurückgefahren und zu einer anderen Reinigungsposition gebracht.

Wie in der Fig. 2 unten angedeutet, kann der Reinigungskopf 15 in seiner zurückgefahrenen Position auch auf das Übergabeband 10 zu dessen Reinigung abgesenkt werden.

Für die Reinigung der anderen Bandebenen wird der Reinigungskopf zwischen die Bandniveaus eingefahren, um auf die betreffende Gurtoberfläche positioniert zu werden.

Für die Reinigung ist ein Reinigungsmodus in der Steuerung der Anlage integriert, bei der das jeweilig zu reinigende Förderband mit einer bestimmten Geschwindigkeit betrieben wird. Auf diese Weise kann jedes Bandniveau des Bandpuffers über den Elevator angefahren und gereinigt werden.

Es besteht auch die Möglichkeit, die einlaufseitigen Bänder des Bandpuffers unabhängig von den auslaufseitigen Bändern des Bandpuffers und umgekehrt zu reinigen. Wenn beide Reinigungseinheiten simultan im Reinigungsmodus betrieben werden, ergibt sich eine Halbierung der Reinigungsdauer.

Es ist also möglich, einen Mehrlagen-Bandpuffer während des Betriebs (Produktion) zu reinigen. Hierfür werden dann definiert gewisse Bandebenen leer gefahren, um für eine Reinigung zur Verfügung zu stehen. Nach der Reinigung einer Bandebene steht diese für eine erneute Befüllung wieder zur Verfügung. So können die Fördergurte eines Mehrlagen Bandpuffers definiert gereinigt werden, um z. B. ein neues Produktformat aufzunehmen, während die restlichen Bandebenen noch leergefahren und gereinigt werden. Damit wird dann ein sog. fliegender Produktwechsel möglich.

Der in Fig. 3 gezeigte Bandpuffer arbeitet im Reversierbetrieb, d.h. dass die übereinander liegenden Förderbänder von der Eingangsseite her mit Produkt bestückt werden und auch über die gleiche Seite das Produkt wieder abgeben. Somit arbeitet der Bandpuffer dann nach dem "first-in/last-out"-Prinzip. Bei dieser Anordnung ist eine Reinigungseinrichtung der gleichen Art auf der dem Ein -/Auslauf gegenüber liegenden Seite mit einem dafür vorgesehenen Elevator 20 angeordnet.

Falls der Bandpuffer auf jeder seiner Ebenen mehr als zwei hintereinander angeordnete Bänder besitzt und die mittleren Bänder somit nicht von der Ein- oder Auslaufseite her gereinigt werden können, kann der Reinigungskopf einer eine entsprechenden Reinigungsvorrichtung auch mittels eines seitlich des Bandpuffers angeordneten Elevators von der Seite her auf jeweiligen Gurte gebracht werden.

Der Wassereinsatz ist reduziert gegenüber der herkömmlichen manuellen Reinigung. Ferner ist es möglich während der Produktion automatisiert zu reinigen und durch einen fliegenden Produktwechsel die Umstellzeiten wesentlich zu reduzieren.

## Patentansprüche

1. Bandpuffer (1) mit mehreren übereinander angeordneten Bändern (2,3), mit einem Elevator (8)zum Befüllen und zum Entleeren des Bandpuffers und mit einer Reinigungsvorrichtung (12), wobei die Reinigungsvorrichtung (1) einen Reinigungskopf (15) zum Aufbringen und Absaugen eines Reinigungsmediums und eine Vorrichtung (10,13) zur Höhenverstellung des Reinigungskopfs auf das Niveau des zu reinigenden Gurts und zum Einfahren des Reinigungskopfs über den zu reinigenden Gurt aufweist und wobei die Vorrichtung zur Höhenverstellung des Reinigungskopfs auf das Niveau des zu reinigenden Gurts und zum Einfahren des Reinigungskopfs über den Gurt am Schlitten (9) des Elevators (8) zum Befüllen und zum Entleeren des Bandpuffers angebracht ist und mit dem Schlitten (9) auf das Niveau des zu reinigenden Gurts gebracht wird.

2. Reinigungsverfahren für einen Bandpuffer (1) nach Anspruch 1 mit mehreren übereinander angeordneten Bändern (2,3), **dadurch gekennzeichnet, dass** mit der Reinigungsvorrichtung das Reinigungsmedium auf einen laufenden Gurt aufgebracht und zusammen mit den gelösten Verunreinigungen abgesaugt wird.

3. Reinigungsverfahren nach Anspruch 2, **dadurch gekennzeichnet, dass** das Reinigungsmedium Heissdampf ist.

4. Reinigungsverfahren nach Anspruch 2, **dadurch gekennzeichnet, dass** die Reinigung einzelner leerer Bandstrecken des Bandpuffers erfolgt, während andere Bandstrecken produktiv sind.

## Claims

1. Belt buffer (1) comprising a plurality of belts (2, 3) arranged one above the other, comprising an elevator (8) for filling and emptying the belt buffer and comprising a cleaning device (12), wherein the cleaning device (1) has a cleaning head (15) for applying and sucking off a cleaning medium and a device (10, 13) for adjusting the height of the cleaning head to the level of the belt to be cleaned and for moving the cleaning head over the belt to be cleaned, and wherein the device for adjusting the height of the cleaning head to the level of the belt to be cleaned and for moving the cleaning head over the belt is attached to the slide (9) of the elevator (8) for filling and emptying the belt buffer and, by means of the slide (9), is brought to the level of the belt to be cleaned.

2. Cleaning method for a belt buffer (1) according to claim 1 comprising a plurality of belts (2, 3) arranged one above the other, **characterized in that** the cleaning medium is applied to a running belt by means of the cleaning device and is sucked off together with the loosened impurities.

3. Cleaning method according to claim 2, **characterized in that** the cleaning medium is hot steam.

4. Cleaning method according to claim 2, **characterized in that** individual empty belt portions of the belt buffer are cleaned while other belt portions are productive.

## Revendications

1. Tampon à bandes (1) comprenant une pluralité de bandes (2, 3) superposées, comprenant un élévateur (8) pour remplir et vider le tampon à bandes et comprenant un dispositif de nettoyage (12), le dispositif de nettoyage (1) comportant une tête de nettoyage (15) destinée à appliquer et aspirer un milieu de nettoyage et un dispositif (10, 13) de réglage de la hauteur de la tête de nettoyage au niveau de la courroie à nettoyer et de déplacement de la tête de nettoyage sur la courroie à nettoyer, et le dispositif de réglage de la hauteur de la tête de nettoyage au niveau de la courroie à nettoyer et de déplacement de la tête de nettoyage sur la courroie étant fixé au chariot (9) de l'élévateur (8) pour remplir et vider le tampon à bandes et étant amené avec le chariot (9) au niveau de la courroie à nettoyer.

2. Procédé de nettoyage destiné à un tampon à bandes (1) selon la revendication 1, comprenant plusieurs bandes (2, 3) superposées, **caractérisé en ce que** le dispositif de nettoyage applique le milieu de nettoyage sur une courroie en mouvement et l'aspire conjointement avec les impuretés dissoutes.

3. Procédé de nettoyage selon la revendication 2, **caractérisé en ce que** le milieu de nettoyage est de la vapeur chaude.

4. Procédé de nettoyage selon la revendication 2, **caractérisé en ce que** le nettoyage des différents convoyeurs à bandes vides du tampon à bandes est effectué pendant que les autres convoyeurs à bandes sont productifs.
